# EUROPEAN PATENT SPECIFICATION

(11) **EP 3 617 578 B1**
(45) Date of publication and mention of the grant of the patent: **09.06.2021**
(21) Application number: 18000710.6
(22) Date of filing: 31.08.2018
(51) Int. Cl.: F16L 57/06, B65G 11/16, F16L 9/04, B65G 11/18, B65G 11/02

(54) **SUPPLY CHUTE FOR STONE MATERIAL**
ZUFÜHRRUTSCHE FÜR STEINMATERIAL
GOULOTTE DE CHARGEMENT POUR PIERRES EN VRAC

(43) Date of publication of application: 04.03.2020
(73) Proprietor: Iin Konepaja Ltd, 91100 Ii (FI)
(72) Inventor: Salmela, Kalevi Antero, 92100 Raahe (FI)

(56) References cited:
- EP-A1- 3 205 921
- EP-A1- 3 270 029
- DE-A1- 4 404 638
- DE-C- 510 324
- GB-A- 770 413

## Description

The invention relates to a chute, which suits primarily for supplying stone material into a milling machinery. A supply chute according to the invention is typically used in the concentrator of a mine.

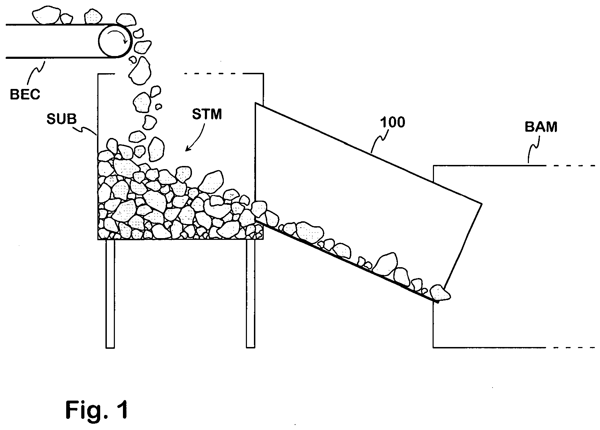

**Fig. 1** shows a principled drawing of the transfer system of stone material to a milling machinery. A conveyer belt BEC for stone material STM, supply box SUB, supply chute 100 and milling machinery BAM are seen in the figure. The end of the conveyer belt is located above the supply box so that the stone material carried by the belt drops into the supply box.

The supply chute 100 is a wide pipe, which is mounted at a tilt e.g. at an angle of 25 degrees. The upper end of the pipe extends through a hole in a wall of the supply box SUB and the lower end is located inside the end of the milling machinery BAM. When the upper level of the stone material STM accumulated in the supply box rises above the lower surface of the upper end of the supply chute, the material dropping into the supply box rolls into the supply chute and further along its inner surface into the milling machinery.

The basic part of a supply chute is typically a supply pipe made from a steel, the diameter of the pipe being in the order of 120 cm. The upper end of the pipe has been cut as oblique so that its cross surface is vertical, when the chute is in the use position. If the structure would comprise only the supply pipe, the stone avalanche would wear its bottom so that the whole supply pipe should be replaced quite too often. In a certain solution wearing course is made for the supply chute by coating the lower side of the inner wall of the supply pipe by thick steel plates, which stands up to wear. The plates are e.g. in five rows, three plates in each row. Each steel plate is fastened on the pipe's wall e.g. by four bolts. After bolting the steel plates further are welded together. When the steel plates are very worn, the wearing course is renewed replacing the steel plates.

A drawback of the above-described structure is that the replacement or repair of the steel plates of the chute requires much work and time. In addition, it has to be done relatively often, in practice at six week intervals, which causes remarkable labour costs and material costs. Further a drawback is that leaks begin to occur during the use at the fastening bolts of the steel plates of the supply chute. This results in that the floor below the chute gets dirty and, due to it, continuous cleaning costs.

From document DE 970 779 is known a supply chute for wearing material, which consists of an outer pipe and inner pipe. There are longitudinal openings with constant distances in the inner pipe and respectively longitudinal ridges on the inner surface of the outer pipe. These ridges match with the openings of the inner pipe so that this is locked at its position. The outer pipe comprises upper and lower halves, which are fastened to each other by bolts. When the inner pipe is worn at its bottom, the bolts are loosened, the upper part of the outer pipe is removed and the inner pipe is raised and rotated so that the ridges of the outer pipe match with the next openings of the inner pipe. Then the upper part of the outer pipe is fastened again. In this way the material of the inner pipe will be utilized for the most part. The drawback of this solution is that the rotation of the inner pipe is time-consuming and requires heavy work.

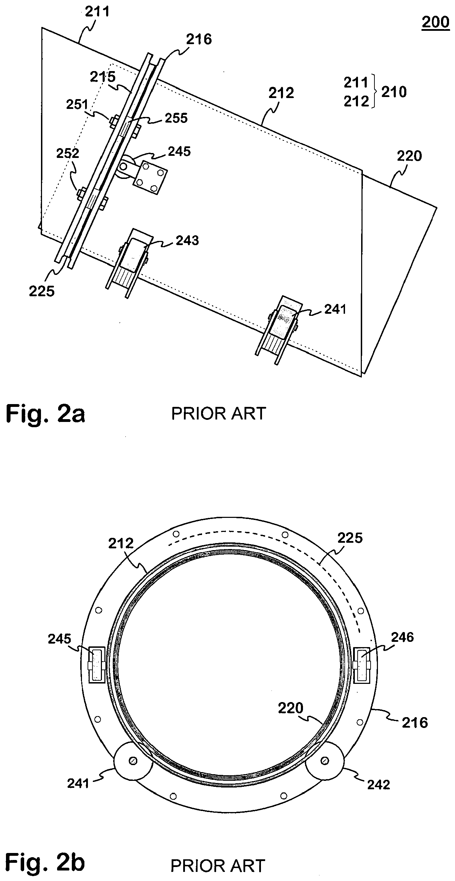

**Figs. 2a** and **2b** show a supply chute for stone material known from document EP 3205921. Fig. 2a shows the supply chute 200 from one side and Fig. 2b from the lower end in the direction of its axis. The supply chute 200 comprises an outer pipe 210 and inner pipe 220. The inner pipe is of wear resistent material and it is rotatable to extend the useful life. For rolling the inner pipe, the outer pipe is two-part: it has an upper pipe 211 and a lower pipe 212, which are fastened to each other by bolt joints. For this purpose there are an upper flange 215 on the outer surface of the lower end of the upper pipe and correspondingly a lower flange 216 on the outer surface of the upper end of the lower pipe, and holes of the fastening bolts in these flanges. Two fastening bolts 251, 252 are seen in Fig. 2a.

On the outer surface of the inner pipe 220 there is a push flange 225. In the ready structure the push flange is located between the upper flange 315 and the lower flange 316 of the outer pipe. The distance of these flanges is longer than the thickness of the push flange so that the inner pipe can be a little moved in the direction of its axis. The mounted inner pipe 220 rests on four support rollers with bearings, in order to make possible to rotate the inner pipe in practice. In Fig. 2a it is seen two support rollers 241, 243 beside the outer pipe and the openings in the outer pipe for those rollers, and in Fig. 2b it is seen the lower roller pair 241, 242. The support rollers are fastened in pairs to the the outer pipe. In addition, at least two side rollers 245, 246 with bearings has been fastened to the outer surface of the lower pipe 212 of the outer pipe so that their axes are directed towards the axis of the inner pipe. Each side roller extends to the space between the upper and lower flange through an opening in the lower flange, towards the push flange 225 of the inner pipe.

During the use of the supply chute the inner pipe 220 is fastened to the outer pipe 210 by the same fastening bolts, by which the parts of the outer pipe has been fastened to each other. When these fastening bolts are released, the inner pipe slides a little downwards in the direction of its axis and stops at its flange 225 to said side rollers 245, 246. After this the inner pipe can be rotated by the power of man, because it rests only to rollers with bearings. The inner pipe is rotated at a time e.g. 40 degrees to get a new wearing course, and the fastening bolts are then tightened. In practice a rotation is done e.g. at six week intervals, and the whole the inner pipe has to be replaced about at a year intervals. In the production these actions cause adverse downtime.

From document DE 510 324 is known a pipeline for conveying of wearing material. The pipeline comprises an outer pipe, on the inner surface of which there is a lining. At the end of the pipeline the lining is thinner than elsewhere along the pipeline. At this thinner point there are indication holes through the outer pipe. When the material to be conveyed has weared out a thinner point of the lining, material gets out via an indication hole. The pipeline is then rotated so that a new indication hole is at the heaving wear area. In this way the lining will be weared evenly before it has to be wholly replaced. Along the bends of the pipeline the lining is thickened on the outer circumference of the bend, and at the end of the bend there is a thinner point with an indication hole.

Document EP 3270029 discloses a tubular structure for conveying fluid state material. The structure comprises an outer tube and inner tube. The lower part of the inner tube has better wear-resistant property than its upper part. The lower part can also be thicker than the upper part because of the harder wear.

Document GB 770 413 discloses an elbow unit in a pipeline, which conveys e.g. mine waters containing also pieces of stone. The elbow comprises a wear-resistant member and guide surfaces to implement more fluent movement of the stone pieces through the elbow.

The object of the invention is to implement a supply chute for stone material by a new way, which reduces the maintenance costs of the supply chute. A supply chute according to the invention is characterized in what is set forth in the independent claim 1. Some preferred embodiments of the invention are set forth in the other claims.

The basic idea of the invention is the following: A chute supplying stone material into a mill machinery consists of an outer pipe and a supply trough on its bottom. The thickness of the supply trough, or trough, varies on the plane of its cross section: It has highest value at the trough bottom and decreases when moving towards the sides. For supporting the trough at its place it is wedge-shaped so that its height is at the upper end greater than at the lower end. In this case, when on the side edges of the trough there are longitudinal locking plates fastened to the outer pipe, the trough can not slide downwards in the outer pipe.

Compared with the known chute technology, the maintenance costs of the supply chute reduce, because replacing the supply trough, by which new wearing course is arranged, is not needed to do so often than the corresponding operation in prior art. This again is due to the shaping of the trough, its relatively thick bottom part. In addition the maintenance costs are reduced owing to the fact that replacing the trough is a simple and quick work. Further the invention has the advantage that no leaks occur in the supply chute according to it, the mill environment thus not becoming messy and the cleaning costs keeping lower.

In the following, the invention will be described in more detail. Reference will be made in the description to the accompanying drawings, in which
- Fig. 1: presents the principle of the transfer system of the stone material to be milled,
- Figs.2a,b: present an example of the supply chute for stone material according to prior art,
- Figs.3a,b: present an example of the supply chute for stone material according to the invention,
- Fig. 4: presents the trough of the supply chute according to Figs. 3a and 3b, and
- Fig. 5: presents an example of the fastening of the locking plates of the trough according to the invention.

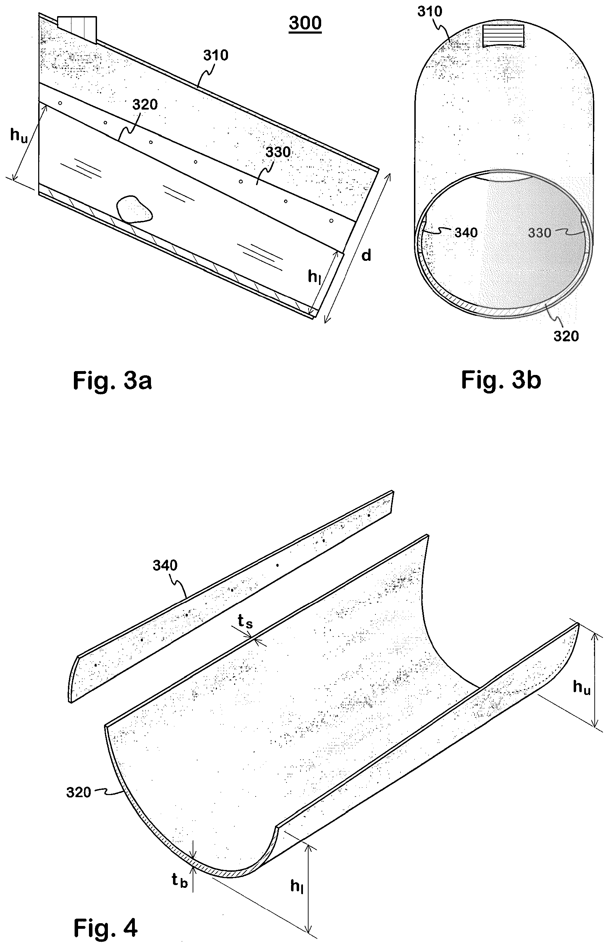

**Figs. 3a, 3b** and **4** show an example of the supply chute for stone material, generally any wearing hard material, according to the invention. In Fig. 3a the supply chute 300 is presented as longitudinal section in its use position, where its tilt angle is about 25 degrees. In Fig. 3b the supply chute is presented as seen from its lower end. In Fig. 4 there is the supply trough according to Figs, 3a and 3b as perspective presentation.

The supply chute 300 comprises an outer pipe 310, a trough 320 and a first 330 and second 340 locking plate. The upper end of the outer pipe has been cut oblique so that its edge matches, in the use position of the chute, the edge of the opening in the vertical wall of the supply box, as in Fig. 1. The diameter **d** of the outer pipe is e.g. 120 cm.

The trough 320 is e.g.of wear resistent steel or cast steel. It is located inside the outer pipe, on the bottom of the pipe. A small space remains between the trough sides and the outer pipe so that the trough can be moved in the longitudinal direction. The trough extends as mounted at least to the plane of both the upper and lower end of the outer pipe. The sides of the trough extend so high in the outer pipe that the wear due to the stone material running in the supply chute falls substantially only on the trough.

According to the invention the thickness of the trough varies on the plane of its cross section: The thickness is at its maximum at the trough bottom and decreases when moving towards the sides. The thickness **t_{b}** in the middle of the bottom is e.g. 50-60 mm and the thickness **tₛ** of the sides is e.g. 20-30 mm. The thick bottom part extends remarkably the replacement interval of the wearing structure part of the supply chute. Compared with the corresponding known structure in Figs. 2a,b, the replacement interval extends about fourfold, to more than half a year.

The trough 320 is wedge-shaped so that the height hᵤ of its upper end is greater than the height hₗ of its lower end. The heights mean here and in the claims the heights measured on the planes parallel with a cross-section plane perpendicular to the axis of the outer pipe. In the example shown in Figs. 3a,b and 4 the height **hₗ** of the lower end of the trough is about 52% of the inner diameter of the outer pipe and the height **hᵤ** of the upper end of the trough is about 45% of the inner diameter of the outer pipe. Regarding the height **hₗ** of the lower end said per cent number is typically in the range 35-50%, and regarding the height **hᵤ** of the upper end typically in the range 45-60%.

To hold the trough 320 in its use position some locking parts are needed for it. Therefore longitudinal locking plates 330, 340 are fastened to the inner surface of the outer pipe 310 so that one side edge of the mounted trough is substantially at its whole length in contact with the lower surface of the first locking plate 330 and correspondingly the other side edge is in contact with the lower surface of the second locking plate 340. In this case the trough can not, owing to its wedge-shaped form, slide downwards in the outer pipe. In Fig. 4 it is seen the second locking plate 340 drawn apart from the trough 320. Seven holes are seen in the locking plate for its fastening.

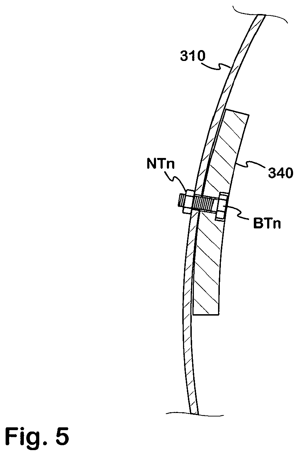

**Fig. 5** shows an example of the fastening way of the locking plates in the supply chute according to the invention. A part of the outer pipe 310, the second locking plate 340 and one fastening mean of this locking plate in the cross-section plane of the supply chute are seen in the figure. In the example the fastening mean is a bolt BTn with its nut NTn, the bolt being located in a hole machined to the locking plate. The bolt extends through a respective hole in the outer pipe. The nut NTn outside the outer pipe tightens the locking plate 340 against the inner surface of the outer pipe.

A trough according to the invention can be removed for the replacement simply by pulling it out of the outer pipe the upper end first. Alternatively the fastening means of either of the locking plates are loosened, after which that locking plate cames off and the trough can move downwards out of the pipe. In any case the replacement of the trough is a quick and simple work compared with corresponding operation in the supply chute structures being in use.

In this description and claims the qualifiers 'upper' and 'lower' refer to the use position of the supply chute and have then nothing to do with the storing and transport positions of the chute parts. The 'longitudinal direction' again means the direction of the axis of the outer pipe with a certain accuracy.

A supply chute for stone material according to the invention has been described above. However, in details its structure can differ from that presented. For example, the locking plates can be fastened by clamps at the ends of the outer pipe, or by locking hinge. The inventive idea can be applied in different ways within the scope set by the independent claim 1.

## Claims

1. A supply chute (300) for wearing material, which chute is intended to be mounted in an oblique position defining a bottom, a lower end and an upper end, and comprises
- an outer pipe (310)
- a structure part (320) to be replaced inside the outer pipe for renewing of wearing course of the supply chute, the thickness of which structure part on the plane of the cross section being at maximum at its bottom and decreasing when moving towards the sides, and
- locking parts (330, 340) for holding the structure part to be replaced in its use position,
wherein said structure part to be replaced is a trough (320) to be mounted on bottom of the outer pipe (310), and
wherein said trough is wedge-shaped so that the height (hᵤ) of its upper end is greater than the height (hₗ) of its lower end.

2. A supply chute according to claim 1, **characterized in that** said locking parts comprise longitudinal first locking plate (330) and second locking plate (340) fastened by fastening means to inner surface of the outer pipe (310) so that one side edge of the mounted trough (320) is substantially at its whole length in contact with the lower surface of the first locking plate and the other side edge of the mounted trough is substantially at its whole length in contact with the lower surface of the second locking plate (340).

3. A supply chute according to claim 1, **characterized in that** the height (hₗ) of the lower end of the trough (320) is in the range 35-52% of the inner diameter of the outer pipe (310) and the height (hᵤ) of the upper end of the trough is in the range 45-60% of the inner diameter of the outer pipe.

4. A supply chute according to claim 2, **characterized in that** said fastening means are bolts (BTn) with nuts (NTn).

## Patentansprüche

1. Eine Zuführrutsche (300) für Material mit Verschleißwirkung, wobei die Rutsche ein Boden, ein unteres Ende und ein oberes Ende hat und in einer schrägen Stellung montiert zu werden ist und Folgendes umfasst:
- ein Außenrohr (310)
- ein austauschbare Konstruktionsteil (320) innerhalb des Außenrohrs zur Erneuerung der Verschleißschicht der Zuführrutsche, wobei die Dicke dieses Konstruktionsteils auf Ebene seines Querschnitts so variiert dass sie am Boden des Konstruktionsteils maximal ist und in Richtung der Seiten abnimmt, und
- Verriegelungsteile (330, 340) zum Halten das austauschbare Konstruktionsteil in seiner Gebrauchsposition,
**gekennzeichnet dadurch, dass** das besagte austauschbaren Konstruktionsteil eine Rinne (320) ist, die am Boden des Außenrohrs (310) hingelegen zu werden ist, und
- diese Rinne keilförmig ist, sodass die Höhe (hᵤ) ihres oberen Endes größer ist als die Höhe (hₗ) ihres unteren Endes.

2. Eine Zuführrutsche nach Patentanspruch 1, **gekennzeichnet dadurch, dass** besagte Verriegelungsteile eine erste Verriegelungsplatte (330) und eine zweite Verriegelungsplatte (340) umfasst, die Verriegelungsplatten in Längsrichtung verlaufen und mithilfe von Befestigungsmitteln so an der Innenfläche des Außenrohrs (310) befestigt sind, dass sich eine Seitenkante der montierten Rinne (320) im Wesentlichen über ihre gesamte Länge in Kontakt mit der Unterkante der ersten Verriegelungsplatte und die andere Seitenkante der montierten Rinne im Wesentlichen über ihre gesamte Länge in Kontakt mit der Unterkante der zweiten Verriegelungsplatte (340) befindet.

3. Eine Zuführrutsche nach Patentanspruch 1, **gekennzeichnet dadurch, dass** die Höhe (hₗ) des unteren Ende der Rinne (320) im Bereich von 35-52 % des Innendurchmessers des Außenrohrs (310) liegt und die Höhe (hᵤ) des oberen Ende der Rinne im Bereich von 45-60 % des Innendurchmessers des Außenrohrs liegt.

4. Eine Zuführrutsche nach Patentanspruch 1, **gekennzeichnet dadurch, dass** besagten Befestigungsmitteln Bolzen (BTn) und Muttern (NTn) sind.

## Revendications

1. Goulotte d'alimentation (300) pour matériau d'usure, laquelle goulotte est destinée à être montée en position oblique définissant un fond, une extrémité inférieure et une extrémité supérieure, et comprend
- un tuyau extérieur (310)
- une pièce de structure (320) à remplacer à l'intérieur du tuyau extérieur pour le renouvellement de la couche d'usure de la goulotte d'alimentation, l'épaisseur de cette pièce de structure sur le plan de sa section transversale étant maximale à son fond et diminuant en allant vers les bords, et
- des pièces de verrouillage (330, 340) pour maintenir la pièce de structure à remplacer dans sa position d'utilisation,
**caractérisée en ce que** ladite pièce de structure à remplacer est une auge (320) à monter sur le fond du tuyau extérieur (310), et
- laquelle auge est en forme de coin de telle sorte que la hauteur (hᵤ) de son extrémité supérieure est supérieure à la hauteur (hₗ) de son extrémité inférieure.

2. Goulotte d'alimentation selon la revendication 1, **caractérisée en ce que** lesdites pièces de verrouillage comprennent une première plaque de verrouillage longitudinale (330) et une seconde plaque de verrouillage (340) fixées par des moyens de fixation sur la surface intérieure du tuyau extérieur (310) de telle sorte qu'un bord latéral de l'auge montée (320) est sensiblement sur toute sa longueur en contact avec la surface inférieure de la première plaque de verrouillage et l'autre bord latéral de l'auge montée est sensiblement sur toute sa longueur en contact avec la surface inférieure de la seconde plaque de verrouillage (340).

3. Goulotte d'alimentation selon la revendication 1, **caractérisée en ce que** la hauteur (hₗ) de l'extrémité inférieure de l'auge (320) est comprise entre 35 et 52 % du diamètre intérieur du tuyau extérieur (310) et la hauteur (hᵤ) de l'extrémité supérieure de l'auge est comprise entre 45 et 60 % du diamètre intérieur du tuyau extérieur.

4. Goulotte d'alimentation selon la revendication 2, **caractérisée en ce que** lesdits moyens de fixation sont des boulons (BTn) avec des écrous (NTn).
